# EUROPEAN PATENT SPECIFICATION

(11) **EP 3 543 553 B1**
(45) Date of publication and mention of the grant of the patent: **30.12.2020**
(21) Application number: 17871810.2
(22) Date of filing: 13.11.2017
(51) Int. Cl.: F16C 33/38, F16C 33/41, F16C 19/06, F16C 19/16, F16C 33/46

(54) **ROLLING BEARING CAGE AND ROLLING BEARING**
WÄLZLAGERKÄFIG UND WÄLZLAGER
CAGE DE PALIER À ROULEMENT ET PALIER À ROULEMENT

(30) Priority: 16.11.2016 JP 2016223002
(43) Date of publication of application: 25.09.2019
(73) Proprietor: NSK Ltd., Tokyo 141-8560 (JP)
(72) Inventor: KENMOCHI, Kenta, Fujisawa-shi Kanagawa 251-8501 (JP); KATSUNO, Yoshiaki, Fujisawa-shi Kanagawa 251-8501 (JP)
(74) Representative: Grünecker Patent- und Rechtsanwälte PartG mbB
(86) International application number: PCT/JP2017/040711
(87) International publication number: WO 2018/092707

(56) References cited:
- WO-A1-2007/063829
- JP-A- H 074 439
- JP-A- 2001 012 478
- JP-A- 2004 036 825
- JP-A- 2008 240 796
- JP-A- 2009 299 705
- JP-A- 2013 053 743
- US-A- 4 365 852
- US-A1- 2014 226 929

## Description

### Technical Field

The present invention relates to a retainer for rolling bearings and a rolling bearing, and more specifically to a retainer for rolling bearings and a rolling bearing such as a rolling bearing for a machine tool spindle and a ball screw support bearing which is applied to a high speed rotation part of, for example, a general industrial machine, a machine tool, and a vehicle such as a train and an airplane.

### Background Art

Recent years have witnessed an increasing demand of quiet performance for a drive motor used in a machine tool, in addition to conventionally demanded high speed, load resistance, and operating life. Among noises generated from a rolling bearing used in a drive motor, particularly among noises that are regarded as abnormal, many noises are generated due to a retainer.

Among the noises caused by a retainer that are regarded as abnormal, a collision noise of the retainer and other members has been particularly problematic in recent years. The collision noise is related to wild movement of the retainer during operation, and preventing the wild movement is indispensable for reduction of the noise.

Therefore, a retainer for rolling bearings is usually provided with an appropriate gap amount between the retainer and other members, so as to avoid competition therebetween, prevent wild movement of the retainer, and rotate the bearing smoothly.

A resin retainer described in Patent Literature 1 is related to a technique in which a retainer pocket is formed with a tapered surface having a tapered gradient larger than a friction angle, and a lower limit of the taper gradient is determined, so as to prevent a retainer noise caused by self-oscillation of the retainer and a problem of a contact point between a rolling element and the tapered surface.

### Prior Art Document

### Patent Document

Patent Literature 1: JP-A-5870563 US 4 365 852 A discloses the features of the preamble of claim 1.

### Summary of the Invention

### Problems to be Solved by the Invention

As a speed of the bearing increases, a centrifugal force applied to the retainer also increases, that is, an assumed deformation amount of the retainer during operation increases, and it is further desirable to maintain the appropriate gap amount described above in an entire range of a rotational speed to be used.

A retainer employed in a rolling bearing is roughly classified into two types of retainers, one of which is a retainer of a raceway ring guide type that is rotationally guided by a raceway ring and another one of which is a retainer of a rolling element guide type that is rotationally guided by a rolling element. Of the two types, the retainer of the rolling element guide type is mainly employed in a bearing for the above drive motor for a reason of cost. Particularly, a crown retainer is often selected for a reason of bearing assembly, in which one side of a retainer pocket is open.

The crown retainer has a characteristic, as compared with other types of retainers in terms of a shape, that a retainer deformation amount due to a centrifugal force is large, particularly an increase amount of a circumferential length of a pocket, and it is difficult to maintain the gap amount corresponding to an increase in the speed of the bearing. Accordingly, improvement is particularly required.

Further, in the resin retainer described in Patent Literature 1, an upper limit of the taper gradient is not determined, and establishment of the taper gradient when considering the entire bearing is not mentioned.

The present invention is made in view of the above problems, and an object thereof is to provide a retainer for rolling bearings, being of a rolling element guide type, and a rolling bearing which can prevent an increase in a gap amount between a retainer and a rolling element due to a centrifugal force of the retainer and maintain an appropriate gap amount between the retainer and the rolling element in a wide range of a rotational speed, thereby preventing a retainer noise.

### Means for Solving the Problems

The object of the present invention is achieved by following configurations.
(1) There is provided a retainer for rolling bearings, being of a rolling element guide type, having a plurality of pockets that are disposed at a predetermined interval in a circumferential direction and configured to hold a plurality of rolling elements respectively.
   The pocket of the retainer has, in a neutral position where a revolution axis of the rolling element coincides with a rotation axis of the retainer, a straight surface that is parallel to a straight line connecting a center of the rolling element and the rotation axis, and a tapered surface that connects the straight surface on an inner diameter side of the straight surface, the tapered surface extending and being inclined toward the straight line as moving radially away from the straight surface.
   The tapered surface comes into surface contact with the rolling element when the rolling element and the retainer move relative to each other along the straight line.
   A connection point between the straight surface and the tapered surface is on an inner diameter side of an intersection portion between an extension plane of a rolling element equatorial plane and a wall surface of the pocket, the extension plane passing through the center of the rolling element and being perpendicular to the straight line.
   In a two-dimensional cross section passing through centers of the plurality of rolling elements, a distance between the rolling element and the wall surface of the pocket in the extension plane of the rolling element equatorial plane in the neutral position is smaller than a shortest distance between the tapered surface and the rolling element in a direction perpendicular to the straight line.
   In the two-dimensional cross section passing through centers of the plurality of rolling elements, an angle between a first line and the extension plane of the rolling element equatorial plane is smaller than an angle between a second line and the extension plane of the rolling element equatorial plane, the first line connecting a contact point, which is formed when the rolling element and the retainer move relative to each other along the straight line and the tapered surface and the rolling element are in contact with each other, and the center of the rolling element, and the second line connecting an intersection of a shoulder maximum outer diameter of an inner ring and a contour of the rolling element and the center of the rolling element.
(2) In the retainer for rolling bearings according to (1), the retainer has an inner diameter side convex portion protruding radially inward at an axial intermediate portion of the retainer, and a minimum inner diameter of the inner diameter side convex portion is larger than at least one of shoulder maximum outer diameters of the inner ring.
(3) In the retainer for rolling bearings according to (1) or (2), the retainer is a crown retainer having an annular portion and a plurality of column portions extending axially from the annular portion.
(4) In the retainer for rolling bearings according to (3), a center position of the rolling element in an axial direction of the rolling bearing is shifted from a center position of the inner ring and an outer ring so as to be separated from the annular portion.
(5) In the retainer for rolling bearings according to (3) or (4), an inner diameter of the annular portion is smaller than an inner diameter of a tip portion of the column portions.
(6) In the retainer for rolling bearings according to any one of (1) to (5), the retainer is formed of a synthetic resin.
(7) In the retainer for rolling bearings according to any one of (1) to (6), the rolling element is a ball.
(8) There is provided a rolling bearing including the retainer for rolling bearings according to any one of (1) to (7).

### Effect of the Invention

According to the retainer for rolling bearings, being of a rolling element guide type, and the rolling bearing of the present invention, the pocket of the retainer has the straight surface and the tapered surface where the ball comes into surface contact therewith. The connection point between the straight surface and the tapered surface is on the inner diameter side of the intersection portion between the extension plane of the rolling element equatorial plane and the wall surface of the pocket. In the two-dimensional cross section passing through the centers of the plurality of rolling elements, the distance between the rolling element and the wall surface of the pocket in the extension plane of the rolling element equatorial plane in the neutral position is smaller than the shortest distance between the tapered surface and the rolling element in the direction perpendicular to the radial direction. In the two-dimensional cross section passing through centers of the plurality of rolling elements, the angle between the first line and the extension plane of the rolling element equatorial plane is smaller than the angle between the second line and the extension plane of the rolling element equatorial plane, the first line connecting the contact point, which is formed when the rolling element and the retainer move relative to each other along the straight line and the tapered surface and the rolling element are in contact with each other, and the center of the rolling element, and the second line connecting the intersection of the shoulder maximum outer diameter of the inner ring and the contour of the rolling element and the center of the rolling element. Accordingly, an increase in a gap amount between the retainer and the rolling element due to the centrifugal force of the retainer is prevented, and a proper gap amount between the retainer and the rolling element is maintained in a wide range of a rotational speed. As a result, a retainer noise can be prevented.

### Brief Description of Drawings

FIG. 1 is a cross-sectional view of a deep groove ball bearing that includes a retainer for rolling bearings according to a first embodiment of the present invention.
FIG. 2 is a cross-sectional view that is taken along a line II-II in FIG. 1 and illustrates a state in which a ball and the retainer according to the first embodiment are in a neutral position.
FIG. 3 is a radial view of the ball and the retainer in FIG. 2.
FIG. 4 illustrates a state in which the ball moves radially relative to the retainer and comes into contact with a tapered surface of the retainer.
FIG. 5A illustrates a state in which the radially moving ball and the tapered surface of the retainer according to this embodiment are in surface contact due to an increase in a pocket circumferential length of the retainer, and FIG. 5B illustrates a state in which a radially moving ball and a retainer in the related art are in edge contact due to an increase in a pocket circumferential length of the retainer.
FIG. 6A illustrates a state in which a ball and a retainer having a small tapered gradient angle according to a comparative example are in a neutral position, and FIG. 6B illustrates a state in which the ball moves radially relative to the retainer according to the comparative example and comes into contact with a tapered surface of the retainer.
FIG. 7A illustrates a state in which a ball and a retainer having a large tapered gradient angle according to another comparative example are in a neutral position, and FIG. 7B illustrates a state in which the ball moves radially relative to the retainer according to the comparative example and comes into contact with a tapered surface of the retainer.
FIG. 8A is a cross-sectional view of a deep groove ball bearing that includes a retainer for rolling bearings according to a second embodiment of the present invention, and FIG. 8B is a radial view of a ball and the retainer.
FIG. 9 is a cross-sectional view of a deep groove ball bearing that includes a retainer for rolling bearings according to a third embodiment of the present invention.
FIG. 10 is a cross-sectional view of a deep groove ball bearing according to a modification of the third embodiment.
FIGS. 11A to 11D are cross-sectional views of deep groove ball bearings that each include a modification of a retainer for rolling bearings having a different shape on an inner diameter side convex portion.
FIGS. 12A to 12C are radial views of modifications of a retainer for rolling bearings in which axial positions of an inner diameter side convex portion are different from each other.
FIGS. 13A and 13B are radial views illustrating modifications of a retainer for rolling bearings.

### Description of Embodiments

Hereinafter, a retainer for rolling bearings and a rolling bearing according to one embodiment of the present invention will be described in detail with reference to the drawings.

### (First Embodiment)

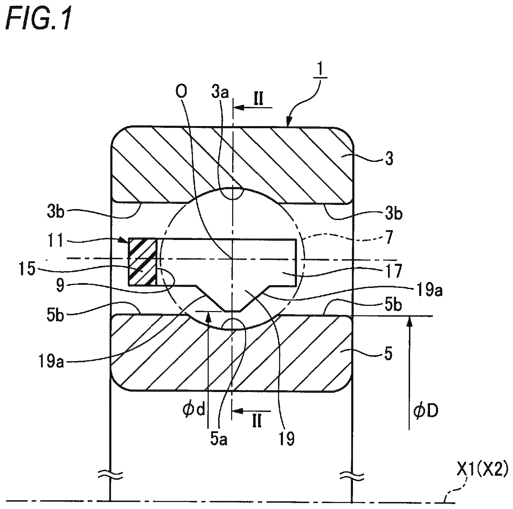

First, a deep groove ball bearing 1 that includes a crown retainer 11 according to the first embodiment of the present invention will be described. As illustrated in FIG. 1, the deep groove ball bearing 1 includes an outer ring 3 having an outer ring raceway surface 3a on an inner peripheral surface, an inner ring 5 having an inner ring raceway surface 5a on an outer peripheral surface, a plurality of balls 7 rotatably disposed between the outer ring raceway surface 3a and the inner ring raceway surface 5a, and the crown retainer 11 disposed between the outer ring 3 and the inner ring 5. The crown retainer 11 holds the balls 7 rotatably within pockets 9. Grease is enclosed in an internal space of the deep groove ball bearing 1 as a lubricant. The lubricant may also be oil.

The outer ring 3 has a shoulder portion 3b on both axial sides of the outer ring raceway surface 3a on the inner peripheral surface, and the inner ring 5 has a shoulder portion 5b on both axial sides of the inner ring raceway surface 5a on the outer peripheral surface.

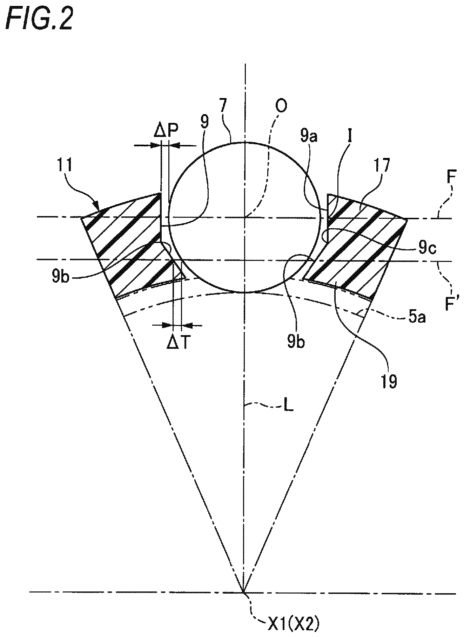

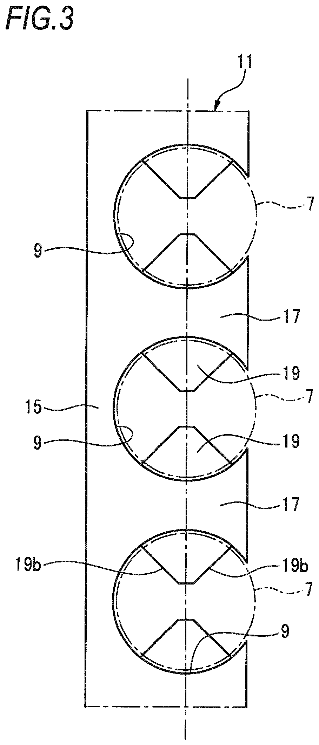

Referring also to FIGS. 2 and 3, the crown retainer 11 is a retainer of a ball guide type made of a synthetic resin, and includes an annular portion 15, a plurality of column portions 17 axially extending from the annular portion 15 at a predetermined interval in a circumferential direction, and a plurality of pockets 9 that rotatably hold the balls 7 with the annular portion 15 and adjacent column portions 17. Therefore, the pockets 9 are opened on both radial sides and one axial side (right side in FIG. 1).

Examples of a synthetic resin material of the crown retainer 11 includes polyamide, polyacetal, polyether ether ketone, polyimide, and polyphenylene sulfide, and the like, and a reinforcing material such as a glass fiber, a carbon fiber, and an aramid fiber may be added to the resin as necessary.

As illustrated in FIG. 2, the pocket 9 of the crown retainer 11 has, in a neutral position where a revolution axis X1 of the ball 7 coincides with a rotation axis X2 of the crown retainer 11, a straight surface 9a that is parallel to a straight line L connecting a center O of the ball 7 and the rotation axis X2, and a tapered surface 9b that connects the straight surface 9a on an inner diameter side of the straight surface 9a. The tapered surface 9b extends and is inclined toward the straight line L as moving radially away from the straight surface 9a. Specifically, in this embodiment, the straight surface 9a has a cylindrical shape having the straight line L as a central axis, and the tapered surface 9b has a conical shape having the straight line L as a central axis.

The crown retainer 11 has, at an axial intermediate portion, an inner diameter side convex portion 19 protruding radially inward from an inner peripheral surface of the column portion 17, so that a pair of tapered surfaces 9b crosses over adjacent column portions 17 and inner diameter side convex portions 19. The inner diameter side convex portions 19 are line-symmetrical with respect to an axial center, and have an inclined surface 19a on both axial sides such that an axial width of the inclined surface 19a becomes smaller as approaching a radial inner side, as is illustrated in FIG. 1. Further, as illustrated in FIG. 3, when viewed from a radial outer side, the inner diameter side convex portions 19 have another inclined surface 19b on both axial sides such that an axial width of the inclined surface 19b becomes smaller as approaching a center of the pocket 9. A minimum inner diameter ϕd of the inner diameter side convex portion 19 is larger than at least one of maximum outer diameters ϕD of shoulder portions 5b of the inner ring 5.

The inner diameter side convex portion 19 forming the tapered surface 9b is not provided on another axial side (left side in FIGS. 1 and 3) of the pocket 9. Accordingly, a gap can be defined between the pocket 9 and the ball 7, so that a lubricant can be supplied from the gap.

As described above, in the crown retainer 11 in this embodiment, an increase in a gap amount between the retainer 11 and the ball 7 due to a centrifugal force of the retainer 11 is prevented, a proper gap amount between the retainer 11 and the ball 7 is maintained in a wide range of a rotational speed, and a retainer noise is prevented. Therefore, it is important to define a gap (hereinafter referred to as pocket gap (2ΔP)) in a rotation direction of the retainer 11 between the pocket 9 of the retainer 11 and the ball 7, and a gap in a radial direction of the retainer 11 between the pocket 9 of the retainer 11 and the ball 7 (hereinafter referred to as pocket gap (2ΔR)).

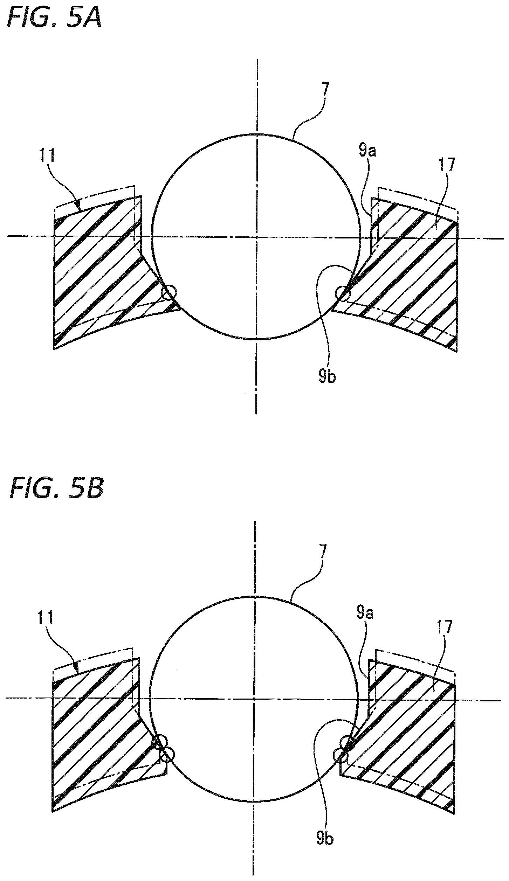

Therefore, a pair of tapered surfaces 9b comes into surface contact with the ball 7 when the ball 7 and the retainer 11 move relative to each other along the straight line L (that is, radially), which is a first condition. Further, as illustrated in FIG. 5A, the pair of tapered surfaces 9b also comes into surface contact with the ball 7 when a pocket circumferential length of the retainer 11 increases due to the centrifugal force and the retainer 11 moves radially. In this case, a contact position of the ball 7 with the tapered surfaces 9b does not change before and after deformation of the crown retainer 11. That is, an angle α between a line a and an extension plane F of a rolling element equatorial plane does not change. The line a connects a contact point P₁, which is formed when the tapered surface 9b and the ball 7 are in contact with each other, and a center O of the ball 7.

On the other hand, in a crown retainer in the related art illustrated in FIG. 5B, the tapered surface 9b and the ball 7 abut at an edge. Accordingly, a contact point between the tapered surface 9b and the ball 7 moves (the angle α changes) before and after deformation of the crown retainer 11. Therefore, in the crown retainer in the related art, a radial change amount of the retainer is a radial increase amount of the retainer 11.

In the crown retainer 11, as illustrated in FIG. 2, a connection point 9c between the straight surface 9a and the tapered surface 9b is on an inner diameter side of an intersection portion I between the extension plane F of the rolling element equatorial plane and a wall surface of the pocket 9, which is a second condition. The extension plane F passes through the center O of the ball 7 and is perpendicular to the straight line L. At the same time, in a two-dimensional cross section passing through centers O of the plurality of balls 7, a distance ΔP between the ball 7 and the wall surface of the pocket 9 in the extension plane F of the rolling element equatorial plane, in the neutral position illustrated in FIG. 2, is designed to be smaller than a shortest distance ΔT between the tapered surface 9b and the ball 7 in a direction (a direction F' parallel to the extension plane F of the rolling element equatorial plane) perpendicular to the straight line L.

Accordingly, the pocket gap (2ΔP) can be determined only by the ball 7 and the straight surface 9a without interference of the tapered surface 9b. That is, when the retainer 11 moves parallel to the revolution axis X1 of the ball 7 relative to the ball 7 and comes into contact with the ball 7, a reaction force acts in a direction opposite to a movement direction of the retainer 11, so that wild movement of the retainer 11 can be prevented. That is, the ball 7 first comes into contact with the tapered surface 9b, and a reaction force is generated in the radial direction of the retainer 11, so that the wild movement of the retainer 11 can be prevented. Further, friction between the pocket 9 and the ball 7 is also reduced, and it is possible to prevent heat generation, an increase in torque, and the like.

In addition, ΔT is given by a relationship between the radial movement amount ΔR of the retainer and the angle α (ΔT = ΔR × tan α).

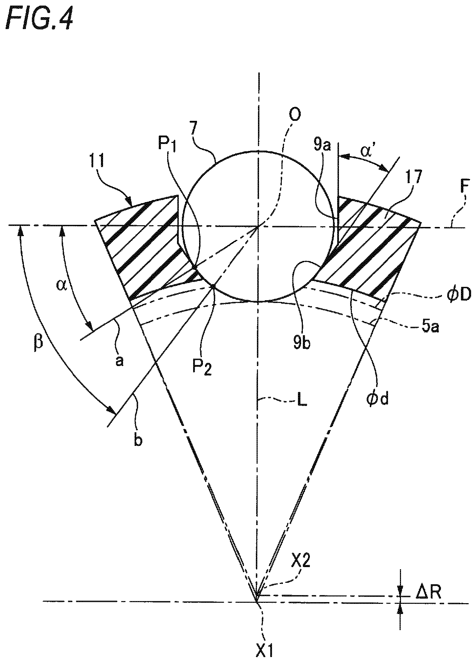

As a third condition, in the two-dimensional cross section passing through the centers O of the plurality of balls 7 illustrated in FIG. 4, the angle α between the line a and the extension plane F of the rolling element equatorial plane is smaller than an angle β between a line b and the extension plane F of the rolling element equatorial plane. The line a connects the contact point P₁, which is formed when the ball 7 and the retainer 11 move relative to each other along the straight line L and the tapered surface 9b and the ball 7 are in contact with each other, and the center O of the ball 7, and the line b connects an intersection P₂ of the shoulder maximum outer diameter ϕD of the inner ring 5 and a contour of the ball 7 and the center O of the ball 7.

This is in order to ensure bearing assembly, and the minimum inner diameter ϕd of the retainer 11 has to be larger than at least one of the shoulder maximum outer diameters ϕD of the inner ring 5. Particularly, the angle α needs to be smaller than the angle β under a condition where the retainer 11 is in contact with the ball 7, so as to maintain a tapered contact during contact between the retainer 11 and the ball 7.

When the first condition is satisfied (that is, the tapered surface 9b and the ball 7 come into surface contact when the ball 7 and the retainer 11 move relative to each other along the straight line L), an angle (hereinafter, referred to as "tapered gradient angle") α' between the straight surface 9a and the tapered surface 9b of the retainer 11 is equal to α.

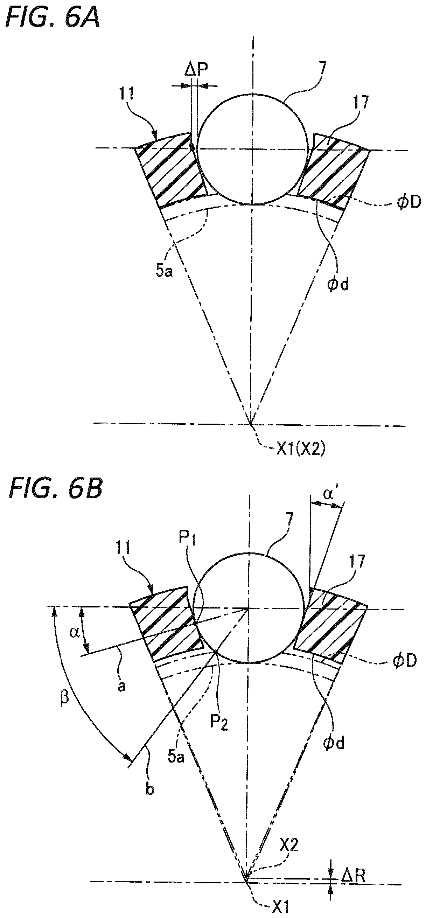

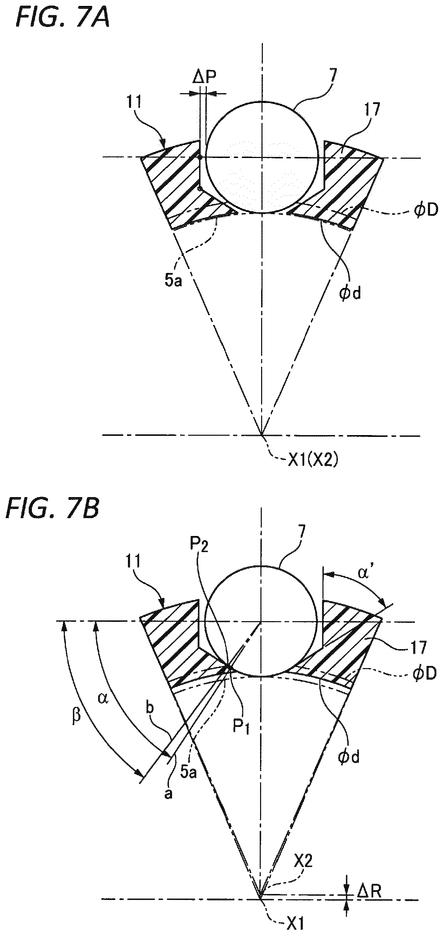

FIGS. 4, 6, and 7 illustrate a relationship between α and β when the tapered gradient angle α' is changed in a state in which ΔP and ΔR are constant and the tapered contact is established. That is, FIG. 4 satisfies all of the first to third conditions in this embodiment including α < β. On the other hand, as illustrated in FIG. 6, the second condition is not satisfied when α' is too small, and the ball 7 comes into contact with the tapered surface 9b of the retainer 11. When α' is too large (α' = α > β), as illustrated in FIG. 7, the minimum inner diameter ϕd of the retainer 11 is smaller than the shoulder maximum outer diameter ϕD of the inner ring 5, and the retainer 11 cannot be assembled from a shoulder portion side.

As described above, according to the crown retainer 11 and the deep groove ball bearing 1 in this embodiment, the pocket 9 of the retainer 11 has the straight face 9a and the tapered surface 9b that comes into surface contact with the ball 7. The connection point 9c between the straight surface 9a and the tapered surface 9b is on the inner diameter side of the intersection position I between the extension plane F of the rolling element equatorial plane and the wall surface of the pocket 9. In the two-dimensional cross section passing through the centers O of the plurality of balls 7, the distance ΔP between the ball 7 and the wall surface of the pocket 9 in the extension plane F of the rolling element equatorial plane in the neutral position is smaller than the shortest distance ΔT between the tapered surface 9b and the ball 7 in the direction perpendicular to the straight line L. In the two-dimensional cross section passing through the centers O of the plurality of balls 7, the angle α between the line a and the extension plane F of the rolling element equatorial plane is smaller than the angle β between the line b and the extension plane F of the rolling element equatorial plane. The line a connects the contact point P₁, which is formed when the ball 7 and the retainer 11 move relative to each other along the straight line L and the tapered surface 9b and the ball 7 are in contact with each other, and the center O of the ball 7, and the line b connects the intersection P₂ of the shoulder maximum outer diameter ϕD of the inner ring 5 and the contour of the ball 7 and the center O of the ball 7. Accordingly, an increase in a gap amount between the retainer 11 and the ball 7 due to the centrifugal force of the retainer 11 is prevented, and a proper gap amount between the retainer 11 and the ball 7 is maintained in a wide range of a rotational speed. As a result, a retainer noise can be prevented. As a result, a retainer noise can be prevented.

### (Second Embodiment)

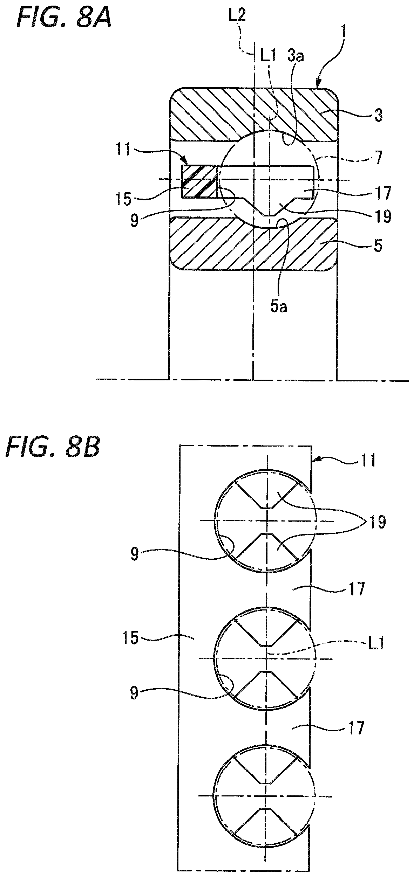

FIG. 8A is a cross-sectional view of a deep groove ball bearing that includes a retainer for rolling bearings according to the second embodiment of the present invention, and FIG. 8B is a radial view of a ball and the retainer.

In this embodiment, an axial thickness of the annular portion 15 is increased, so as to increase rigidity of the annular portion 15. Accordingly, an increase in a pocket circumferential length due to a centrifugal force is prevented, and it is possible to prevent an increase in a pocket gap and a retainer radial movement amount. Therefore, in an axial direction of the deep groove ball bearing 1 in this embodiment, a center position L1 of the ball 7 is shifted to a side opposite to the annular portion 15 from a center position L2 of the outer ring 3 and the inner ring 5, so that the annular portion 15 can be as thick as possible in the axial direction.

Other configurations and operations are the same as those in the first embodiment.

### (Third Embodiment)

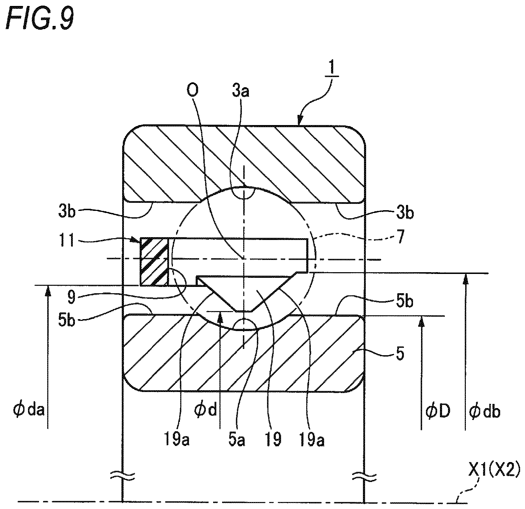

FIG. 9 is a cross-sectional view of a deep groove ball bearing that includes a retainer for rolling bearings according to the third embodiment of the present invention.

In this embodiment, a shape of the crown retainer 11 on an inner diameter side is different from that in the first embodiment, and an inner diameter ϕdb of the column portion 17 at a tip portion is large so that a thickness thereof is small. Therefore, on the tip portion side of the column portion 17, the inclined surface 19a of the inner diameter side convex portion 19 is longer than the inclined surface 19a on the annular portion side, and is continuous to the column portion 17.

Accordingly, the crown retainer 11 in this embodiment satisfies both a relationship of at least one of shoulder maximun outer diameters ϕD of the inner ring 5 < the minimum inner diameter ϕd of the retainer 11 and a relationship of a retainer inner diameter ϕda on the annular portion side < the inner diameter ϕdb of the retainer 11 on the tip portion.

As described above, ϕD < ϕd is a condition for assembly establishing. Further, cpda < ϕdb is a condition to improve insertion assemblability of the ball 7 into the retainer 11 while maintaining rigidity of the annular portion 15.

Other configurations and operations are the same as those in the first embodiment.

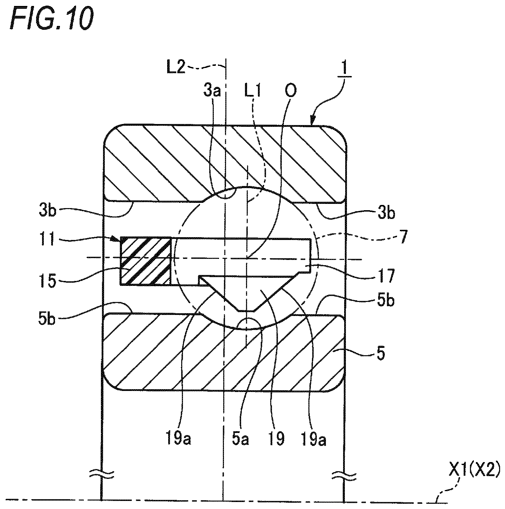

In this embodiment, as illustrated in FIG. 10, an axial thickness of the annular portion 15 may be increased as is in the second embodiment.

The present invention is not limited to the embodiments described above, and can be appropriately modified, improved, and the like.

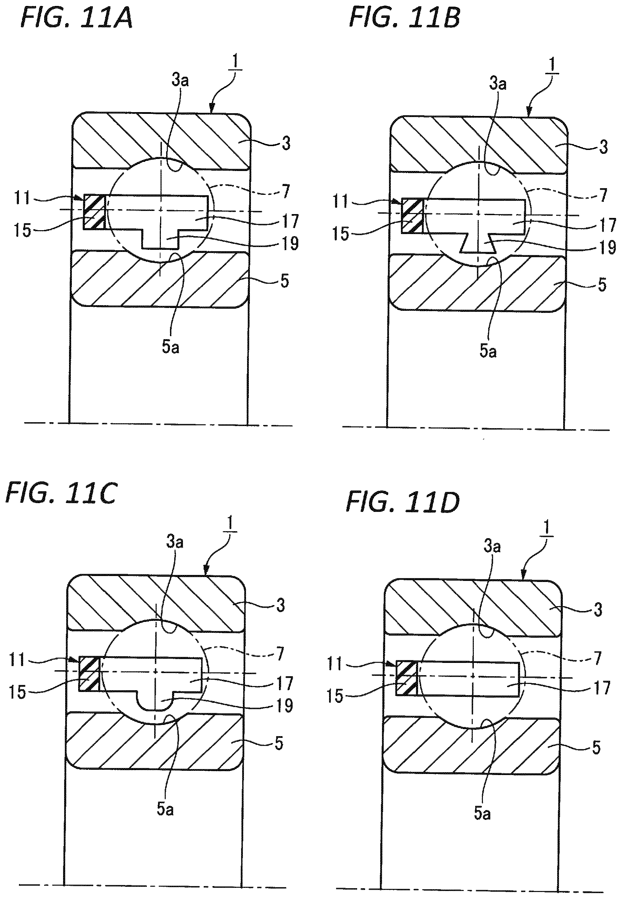

For example, a contour shape of a pocket surface of the crown retainer 11 is not limited to that in the embodiments as long as the pocket surface has a straight surface and a tapered surface, and can be arbitrarily formed. Specifically, the crown retainer 11 may have the rectangular inner diameter side convex portion 19 as illustrated in FIG. 11A or the dovetail-shaped inner diameter side convex portion 19 as illustrated in FIG. 11B. The crown retainer 11 may have the curved inner diameter side convex portion 19 as illustrated in FIG. 11C or have no inner diameter side convex portion 19 as illustrated in FIG. 11D.

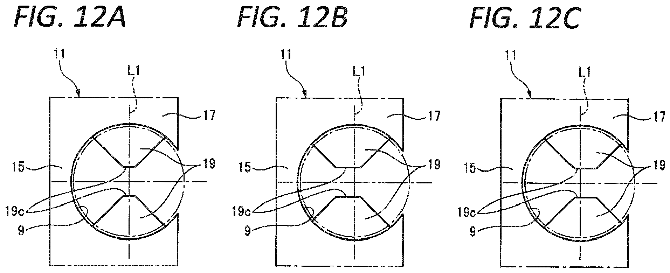

As illustrated in FIGS. 12A to 12C, an axial position of the inner diameter side convex portion 19 preferably overlaps the center position L1 of the ball 7 in the axial direction as illustrated in FIG. 12A to 12C, so that the tapered surface 9b can hold the ball 7. Particularly, as illustrated in FIGS. 12A to 12C, the tip portion 19c preferably overlaps the center position L1 of the ball 7 when the inner diameter side convex portion 19 has a flat tip portion 19c along the axial direction of the crown retainer 11.

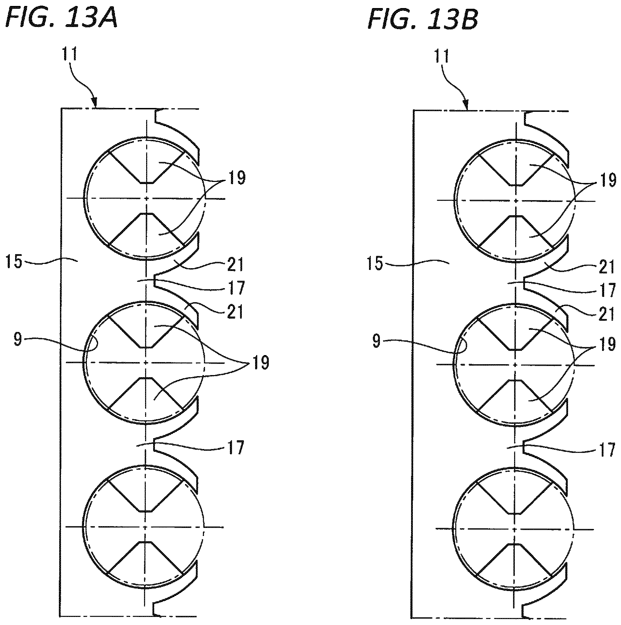

The tip portion of the column portion 17 of the crown retainer 11 may have a claw portion 21 as illustrated in FIGS. 13A and 13B, and an axial thickness of the annular portion 15 may also be increased in this case, as is illustrated in FIG. 13B.

As illustrated in FIGS. 13A and 13B, when the claw portion 21 is provided at the tip portion of the column portion, as in the third embodiment, the inner diameter of the annular portion 15 is smaller than an inner diameter of the claw portion 21, so that rigidity of the annular portion 15 can be ensured, and assemblability of the ball 7 can be improved.

The rolling bearing of the present invention may be, for example, appropriately used to support a main shaft in a spindle device such as a machine tool, or be applied to supporting a motor shaft of a high speed motor.

The rolling bearing of the present invention is not limited to the deep groove ball bearing in the embodiments, and may be another type of rolling bearing such as an angular ball bearing or a cylindrical roller bearing. Therefore, a rolling element is not limited to a ball.

Further, the retainer for rolling bearings is not limited to the crown retainer in the embodiments as long as the retainer is a retainer of a rolling element guide type, and may have a shape having an annular portion at both axial end portions, for example.

Still further, the shoulder minimum inner diameter of the inner ring of the present invention refers to an inner diameter of a lower shoulder on both axial sides of the raceway surface in an angular ball bearing or the like.

### Description of Reference Numerals

- 1: deep groove ball bearing (rolling bearing)
- 3: outer ring
- 5: inner ring
- 7: ball (rolling element)
- 9: pocket
- 9a: straight surface
- 9b: tapered surface
- 9c: connection point
- 11: crown retainer (retainer for rolling bearings)
- 19: inner diameter side convex portion
- F: extension surface of rolling element equatorial plane
- ΔP: distance between rolling element and wall surface of pocket
- ΔT: shortest distance between tapered surface 9b and ball 7

## Claims

1. A rolling bearing (1) with an outer ring (3) having an outer ring raceway surface on an inner peripheral surface, an inner ring (5) having an inner ring raceway surface on an outer peripheral surface, a plurality of balls (7) rotatably disposed between the outer ring raceway surface and the inner ring raceway surface, and a retainer for rolling bearings (11) disposed between the outer ring (3) and the inner ring (5),
the retainer (11) being of a rolling element guide type, having a plurality of pockets (9) that are disposed at a predetermined interval in a circumferential direction and configured to hold a plurality of rolling elements (7) respectively,
wherein the pocket (9) of the retainer (11) has, in a neutral position where a revolution axis of the rolling element (7) coincides with a rotation axis of the retainer (11), a straight surface (9a) that is parallel to a straight line (L) connecting a center of the rolling element (7) and the rotation axis, and a tapered surface (9b) that connects the straight surface (9a) on an inner diameter side of the straight surface, the tapered surface (9b) extending and being inclined toward the straight line (L) as moving radially away from the straight surface (9a),
wherein the tapered surface (9b) comes into surface contact with the rolling element (7) when the rolling element (7) and the retainer (11) move relative to each other along the straight line (L),
wherein a connection point (9c) between the straight surface (9a) and the tapered surface (9b) is on an inner diameter side of an intersection portion between an extension plane (F) of a rolling element equatorial plane and a wall surface of the pocket (9), the extension plane (F) passing through the center of the rolling element (7) and being perpendicular to the straight line (L), and
wherein, in a two-dimensional cross section passing through centers of the plurality of rolling elements (7), an angle between a first line and the extension plane (F) of the rolling element equatorial plane is smaller than an angle between a second line and the extension plane (F) of the rolling element equatorial plane, the first line connecting a contact point, which is formed when the rolling element (7) and the retainer (11) move relative to each other along the straight line (L) and the tapered surface (9b) and the rolling element (7) are in contact with each other, and the center of the rolling element (7), and the second line connecting an intersection of a shoulder maximum outer diameter of the inner ring (5) and a contour of the rolling element (7) and the center of the rolling element (7), **characterized in that**
in the two-dimensional cross section passing through centers of the plurality of rolling elements (7), a distance (ΔP) between the rolling element (7) and the wall surface of the pocket (9) in the extension plane (F) of the rolling element equatorial plane in the neutral position is smaller than a shortest distance (ΔT) between the tapered surface (9b) and the rolling element (7) in a direction perpendicular to the straight line (L).

2. The rolling bearing (1) according to claim 1,
wherein the retainer (11) has an inner diameter side convex portion (19) protruding radially inward at an axial intermediate portion of the retainer (11), and a minimum inner diameter of the inner diameter side convex portion (19) is larger than at least one of shoulder maximum outer diameters of the inner ring (5).

3. The rolling bearing (1) according to claim 1 or 2,
wherein the retainer (11) is a crown retainer having an annular portion and a plurality of column portions extending axially from the annular portion.

4. The rolling bearing (1) according to claim 3,
wherein a center position of the rolling element (7) in an axial direction of the rolling bearing (1) is shifted from a center position of the inner ring (5) and an outer ring (3) so as to be separated from the annular portion.

5. The rolling bearing (1) according to claim 3 or 4,
wherein an inner diameter of the annular portion is smaller than an inner diameter of a tip portion of the column portions.

6. The rolling bearing (1) according to any one of claims 1 to 5,
wherein the retainer (11) is formed of a synthetic resin.

7. The rolling bearing (1) according to any one of claims 1 to 6,
wherein the rolling element (7) is a ball.

## Patentansprüche

1. Wälzlager (1) mit einem Außenring (3), der eine Außenring-Laufbahnfläche an einer Innenumfangsfläche aufweist, einem Innenring (5), der eine Innenring-Laufbahnfläche an einer Außenumfangsfläche aufweist, einer Vielzahl von Kugeln (7), die drehbar zwischen der Außenring-Laufbahnfläche und der Innenring-Laufbahnfläche angeordnet sind, sowie einem Käfig für Wälzlager (11), der zwischen dem Außenring (3) und dem Innenring (5) angeordnet ist,
wobei der Käfig (11) vom Typ Wälzkörper-Führung ist und eine Vielzahl von Taschen (9) aufweist, die in einem vorgegebenen Abstand in einer Umfangsrichtung angeordnet und so ausgeführt sind, dass sie jeweils eine Vielzahl von Wälzkörpern (7) aufnehmen,
wobei die Tasche (9) des Käfigs (11) in einer neutralen Position, in der eine Drehachse des Wälzkörpers (7) mit einer Drehachse des Käfigs (11) zusammenfällt, eine gerade Fläche (9a), die parallel zu einer geraden Linie (L) ist, die einen Mittelpunkt des Wälzkörpers (7) und die Drehachse verbindet, und eine abgeschrägte Fläche (9b) aufweist, die mit der geraden Fläche (9a) an einer Innendurchmesserseite der geraden Fläche verbunden ist, wobei sich die abgeschrägte Fläche (9b) mit radialer Bewegung von der geraden Fläche (9a) weg zu der geraden Linie (L) hin erstreckt und geneigt ist,
die abgeschrägte Fläche (9b) in Flächenkontakt mit dem Wälzkörper (7) kommt, wenn sich der Wälzkörper (7) und der Käfig (11) relativ zueinander entlang der geraden Linie (L) bewegen,
ein Verbindungspunkt (9c) zwischen der geraden Fläche (9a) und der abgeschrägten Fläche (9b) an einer Innendurchmesserseite eines Abschnitts liegt, an dem eine Verlängerungsebene (F) einer Wälzkörper-Äquatorebene und eine Wandfläche der Tasche (9) einander schneiden, wobei die Verlängerungsebene (F) durch die Mitte des Wälzkörpers (7) verläuft und senkrecht zu der geraden Linie (L) ist, und
in einem zweidimensionalen Querschnitt, der durch die Mittelpunkte der Vielzahl von Wälzkörpern (7) verläuft, ein Winkel zwischen einer ersten Linie und der Verlängerungsebene (F) der Wälzkörper-Äquatorebene kleiner ist als ein Winkel zwischen einer zweiten Linie und der Verlängerungsebene (F) der Wälzkörper-Äquatorebene, wobei die erste Linie einen Kontaktpunkt, der gebildet wird, wenn sich der Wälzkörper (7) und der Käfig (11) relativ zueinander entlang der geraden Linie (L) bewegen und die abgeschrägte Fläche (9b) und der Wälzkörper (7) in Kontakt miteinander sind, und den Mittelpunkt des Wälzkörpers (7) verbindet, und die zweite Linie einen Schnittpunkt eines maximalen Schulter-Außendurchmessers des Innenrings (5) und einer Kontur des Wälzkörpers (7) und den Mittelpunkt des Wälzkörpers (7) verbindet, **dadurch gekennzeichnet, dass**
in dem zweidimensionalen Querschnitt, der durch die Mittelpunkte der Vielzahl von Wälzkörpern (7) verläuft, ein Abstand (ΔP) zwischen dem Wälzkörper (7) und der Wandfläche der Tasche (9) in der Verlängerungsebene (F) der Wälzkörper-Äquatorebene in der neutralen Position kleiner ist als ein kürzester Abstand (ΔT) zwischen der abgeschrägten Fläche (9b) und dem Wälzkörper (7) in einer Richtung senkrecht zu der geraden Linie (L).

2. Wälzlager (1) nach Anspruch 1,
wobei der Käfig (11) einen konvexen Abschnitt (19) an der Innendurchmesser-Seite aufweist, der an einem axialen Zwischenabschnitt des Käfigs (11) radial nach innen vorsteht, und ein minimaler Innendurchmesser des konvexen Abschnitts (19) an der Innendurchmesser-Seite größer ist als wenigstens einer der maximalen Schulter-Außendurchmesser des Innenrings (5).

3. Wälzlager (1) nach Anspruch 1 oder 2,
wobei der Käfig (11) ein Kronenkäfig ist, der einen ringförmigen Abschnitt sowie eine Vielzahl von Säulenabschnitten aufweist, die sich axial von dem ringförmigen Abschnitt erstrecken.

4. Wälzlager (1) nach Anspruch 3,
wobei eine Mittelposition des Wälzkörpers (7) in einer axialen Richtung des Wälzlagers (1) gegenüber einer Mittelposition des Innenrings (5) und eines Außenrings (3) so verschoben ist, dass sie von dem ringförmigen Abschnitt getrennt ist.

5. Wälzlager (1) nach Anspruch 3 oder 4,
wobei ein Innendurchmesser des ringförmigen Abschnitts kleiner ist als ein Innendurchmesser eines Spitzenabschnitts der Säulenabschnitte.

6. Wälzlager (1) nach einem der Ansprüche 1 bis 5,
wobei der Käfig (11) aus einem Kunstharz besteht.

7. Wälzlager (1) nach einem der Ansprüche 1 bis 6,
wobei der Wälzkörper (7) eine Kugel ist.

## Revendications

1. Roulement à palier (1) avec une bague extérieure (3) ayant une surface de chemin de roulement de bague extérieure sur une surface périphérique intérieure, une bague intérieure (5) ayant une surface de chemin de roulement de bague intérieure sur une surface périphérique extérieure, une pluralité de billes (7) disposées de manière rotative entre la surface de chemin de roulement de bague extérieure et la surface de chemin de roulement de bague intérieure, et un dispositif de retenue pour les roulements (11) disposé entre la bague extérieure (3) et la bague intérieure (5),
le dispositif de retenue (11) étant du type à guidage d'éléments roulants, ayant une pluralité de poches (9) qui sont disposées à un intervalle prédéterminé dans une direction circonférentielle et configurées pour contenir une pluralité d'éléments roulants (7) respectivement,
dans lequel la poche (9) du dispositif de retenue (11) présente, dans une position neutre où un axe de rotation de l'élément de roulement (7) coïncide avec un axe de rotation du dispositif de retenue (11), une surface rectiligne (9a) qui est parallèle à une ligne droite (L) reliant un centre de l'élément de roulement (7) et l'axe de rotation, et une surface conique (9b) qui relie la surface rectiligne (9a) sur un côté du diamètre intérieur de la surface rectiligne, la surface conique (9b) s'étendant et étant inclinée vers la ligne droite (L) en s'éloignant radialement de la surface rectiligne (9a),
dans lequel la surface conique (9b) entre en contact avec l'élément de roulement (7) lorsque l'élément de roulement (7) et le dispositif de retenue (11) se déplacent l'un par rapport à l'autre le long de la ligne droite (L),
dans lequel un point de connexion (9c) entre la surface rectiligne (9a) et la surface conique (9b) se trouve sur un côté du diamètre intérieur d'une partie d'intersection entre un plan d'extension (F) d'un plan équatorial de l'élément de roulement et une surface de paroi de la poche (9), le plan d'extension (F) passant par le centre de l'élément de roulement (7) et étant perpendiculaire à la ligne droite (L), et
dans lequel, dans une section transversale bidimensionnelle passant par les centres de la pluralité d'éléments roulants (7), un angle entre une première ligne et le plan d'extension (F) du plan équatorial de l'élément roulant est plus petit qu'un angle entre une deuxième ligne et le plan d'extension (F) du plan équatorial de l'élément roulant, la première ligne reliant un point de contact, qui est formée lorsque l'élément de roulement (7) et le dispositif de retenue (11) se déplacent l'un par rapport à l'autre le long de la ligne droite (L) et de la surface conique (9b) et que l'élément de roulement (7) est en contact l'un avec l'autre, et le centre de l'élément de roulement (7), et la seconde ligne reliant une intersection d'un diamètre extérieur maximum d'épaulement de la bague intérieure (5) et un contour de l'élément de roulement (7) et le centre de l'élément de roulement (7), **caractérisé en ce que**
dans la section transversale bidimensionnelle passant par les centres de la pluralité d'éléments roulants (7), une distance (AP) entre l'élément roulant (7) et la surface de paroi de la poche (9) dans le plan d'extension (F) du plan équatorial de l'élément roulant en position neutre est inférieure à une distance la plus courte (AT) entre la surface conique (9b) et l'élément roulant (7) dans une direction perpendiculaire à la ligne droite (L),

2. Palier à roulement (1) selon la revendication 1,
dans lequel le dispositif de retenue (11) a une partie convexe latérale de diamètre intérieur (19) faisant saillie radialement vers l'intérieur au niveau d'une partie axiale intermédiaire du dispositif de retenue (11), et un diamètre intérieur minimum de la partie convexe latérale de diamètre intérieur (19) est supérieur à au moins un des diamètres extérieurs maximum d'épaulement de la bague intérieure (5).

3. Palier à roulement (1) selon les revendications 1 ou 2,
dans lequel le dispositif de retenue (11) est un dispositif de retenue de couronne ayant une partie annulaire et une pluralité de parties de colonne s'étendant axialement à partir de la partie annulaire.

4. Palier à roulement (1) selon la revendication 3,
dans lequel une position centrale de l'élément roulant (7) dans une direction axiale du roulement (1) est décalée d'une position centrale de la bague intérieure (5) et d'une bague extérieure (3) de manière à être séparée de la partie annulaire.

5. Palier à roulement (1) selon les revendications 3 ou 4,
dans lequel le diamètre intérieur de la partie annulaire est plus petit que le diamètre intérieur de la partie de pointe des parties de la colonne.

6. Palier à roulement (1) selon l'une des revendications 1 à 5,
dans lequel le dispositif de retenue (11) est formé d'une résine synthétique.

7. Palier à roulement (1) selon l'une des revendications 1 à 6,
dans lequel l'élément roulant (7) est une bille.
